# EUROPÄISCHE PATENTSCHRIFT

(11) **EP 0 764 801 B1**
(45) Veröffentlichungstag und Bekanntmachung des Hinweises auf die Patenterteilung: **26.02.2003**
(21) Anmeldenummer: 95810583.5
(22) Anmeldetag: 19.09.1995
(51) Int. Cl.: F16J 9/26

(54) **Kolbenring für Verbrennungsmotoren**
Piston ring for combustion engine
Segment de piston pour moteur à combustion

(43) Veröffentlichungstag der Anmeldung: 26.03.1997
(73) Patentinhaber: Wärtsilä Schweiz AG, 8401 Winterthur (CH)
(72) Erfinder: Jaquet, Dominique, CH-8400 Winterthur (CH); Barrow, Samuel, CH-8405 Winterthur (CH); Barbezat, Gérard, CH-8152 Glattbrugg (CH)
(74) Vertreter: Sulzer Management AG

(56) Entgegenhaltungen:
- EP-A- 0 170 763
- DE-B- 2 517 751
- GB-A- 2 277 139
- PATENT ABSTRACTS OF JAPAN vol. 17 no. 645 (M-1517) ,30.November 1993 & JP-A-05 203059 (RIKEN CORP) 10.August 1993,

## Beschreibung

Die vorliegende Erfindung bezieht sich auf einen Kolbenring für Verbrennungsmotoren, insbesondere für Grossdieselmotoren. In der Regel sind mehrere Kolbenringe im oberen Teil des Kolbens in Nuten angeordnet, die über den Umfang des Kolbens verlaufen. Die Kolbenringe sind nicht geschlossen und stossen mit ihrer Aussenfläche, welche gegen die Zylinderwand gerichtet ist, federnd gegen die Zylinderwand. Damit ist der Brennraum gegen das Kurbelgehäuse, bzw. die Unterseite des Kolbens abgedichtet.

Die Kolbenringe sitzen frei beweglich in den Nuten und dürfen keinesfalls in der Nute festsitzen. Im Betrieb drehen die Kolbenringe in ihrer Nute in Umfangsrichtung. Mit der Beweglichkeit in der Nute ist das exakte Anpassen der Aussenfläche des Kolbenrings an die Zylinderwand gewährleistet.

Kolbenringe sind typische Verschleissteile, die sich im Laufe des Betriebs abnutzen und nach einer gewissen Betriebszeit zu ersetzen sind. Insbesondere in der Einlaufphase, beim Einfahren eines Motors, ist in der Regel ein erhöhter Verschleiss an Zylinderwänden und Kolbenringen festzustellen, solange sich die Aussenflächen der Kolbenringe und die inneren Zylinderwände, d.h. die Laufflächen, nicht weitgehend vollständig aneinander angepasst haben. In dieser Einlaufphase werden Ungenauigkeiten in der Fertigung der Kolbenringe und Zylinder ausgeglichen.

Von Motorenherstellern wird häufig empfohlen, Motoren während den ersten Betriebsstunden, also beim Einfahren, u.a. auch um Schäden an Zylindern und Kolbenringen zu vermeiden, besonders sorgfältig zu betreiben. So sollen wenn möglich Höchstleistung, hohe Dauerleistung und abrupte Leistungsänderungen u.s.w. möglichst vermieden werden.

In der Praxis ist insbesondere bei Grossdieselmotoren das sorgfältige Einfahren des Motors nur beschränkt oder gar nicht möglich. Beispielsweise Schiffe werden bei den Abnahmefahrten unter extremen Bedingungen gefahren. Die Abnahmefahrten erfolgen praktisch in den ersten Betriebsstunden des Schiffs, d.h. des Motors. So werden von den Motoren Höchstleistungen im Überlastbereich, also unter extremen Bedingungen gefordert. Schäden an Kolbenringen und Zylindern können trotz besonders aufmerksamer Überwachung des Motors in der Abnahme- und/oder Einlaufzeit des Motors oft nicht vermieden werden, was ärgerliche Reparaturen an praktisch neuen Maschinen notwendig macht.

Darüber hinaus wäre und ist es für die Lebensdauer von Kolbenringen und Zylinder des Motors - aber natürlich auch für andere Teile des Motors wie Lager u.s.w. - auf jeden Fall von Vorteil, wenn der Motor möglichst schonend eingefahren, bzw. hochgefahren wird.

In EP 0.170.763 ist u.a. ein Kolbenringen mit einer Beschichtung beschrieben, die einen hohen Verschleisswiderstand hat. Die Schicht ist porös und die Poren können Schmiermittel aufnehmen oder es können Festschmierstoffe in die Schicht eingelagert sein.

JP 05203059 beschreibt einen Kolbenring, mit zwei Schichten. Es finden sich keine Angaben, ob überhaupt oder in welcher Zeit die Schichten abgetragen werden fehlen. Es wird eine Zinn-Kobalt-Schicht auf einer Hartchrom-Schicht beschrieben. Die Laufschicht dieses Kolbenrings passt sich schneller an die Zylinderwand an.

Es ist die Aufgabe der Erfindung, einen Kolbenring zu schaffen, der die Gefahr von Schäden an Kolbenringen und Zylindern bei der Inbetriebnahme, bei Abnahmeversuchen, beim Einfahren, vermindert und der in dieser kritischen Zeit generell verbesserte Laufeigenschaften aufweist. Sorgfältig und schonend eingefahrene Motoren zeigen meistens während der gesamten Betriebszeit ein verbessertes Laufverhalten.

Ein derartiger Kolbenring weist die Merkmale des Kennzeichens von Anspruch 1 auf. Ein Verbrennungsmotor nach der Erfindung ist durch die Merkmale von Anspruch 12 gekennzeichnet. Die abhängigen Ansprüche beziehen sich auf vorteilhafte Weiterbildungen des Kolbenrings.

Die Erfindung bringt hier einen wesentlichen Fortschritt, indem eine oder mehrere selbstschmierende OberflächenSchichten vorgesehen sind, welche die konventionelle Ölschmierung unterstützen und ergänzen.

So kann beispielsweise eine äussere Schicht, eine sog. Einlaufschicht, so gewählt sein, dass sie innerhalb weniger Betriebsstunden, beispielsweise 5 bis 10 Betriebsstunden abgetragen wird. Die Schicht ist entsprechend weich und führt dazu, dass schon nach kurzer Betriebszeit eventuell vorhandene, fertigungs- und/oder montagebedingte Unregelmässigkeiten der Laufflächen, die zu Dichtungsproblem führen könnten, ausgeglichen werden. Die Einlaufschicht kann beispielsweise eine Dicke von 10 µm bis 300 µm, mit Vorteil 30 µm bis 100 µm, z.B. 0.05 mm (50 µm) aufweisen.

Geeignet als Einlaufschicht ist z.B. ein Verbundwerkstoff aus Metall und Festschmierstoff. Als metallische Matrix ist ein niedrig legierter Stahl mit folgender Zusammensetzung in Gewichtsprozent geeignet:

| | | | |
|---|---|---|---|
| C | 0.5% bis 2%, | vorzugsweise | 1 % |
| Cr | 0.5% bis 3% | vorzugsweise | 1 % |
| Mn | 0.5% bis 2% | vorzugsweise | 1 % |
| Cu | 0.2% bis 2% | vorzugsweise | 1.5% |
| Si | 0.1% bis 1% | vorzugsweise | 0.3% |
| Fe | REST | | |

Als Festschmierstoff eignen sich 2% bis 25%, vorzugsweise 10% (Volumenprozent) hexagonales Bornitrid (BN). Die Schicht kann mit dem APS-Verfahren (Atmosphärisches Plasma Spritzen), mit dem Hochgeschwindigkeits-Flammspritzverfahren [HVOF (High Velocity Oxygen Fuel)], oder mit einem andern Flammspritzverfahren aufgetragen werden.

Weitere geeignete Festschmierstoffe sind Polyester, Polyamid, CaF₂, BaF₂ oder ein Eutektikum dieser Fluoride

Eine unter der Einlaufschicht liegende etwas, härtere bzw. besser haftende weitere Schicht, eine sog. Hochfahrschicht oder Einfahrschicht kann so ausgelegt sein, dass sie innerhalb beispielsweise 200 bis 300 Betriebsstunden abgetragen wird. Diese Schicht soll sehr gute Laufeigenschaften besitzen und einen hohen Fresswiderstand aufweisen, d.h. einen hohen Widerstand gegen Scuffing. Scuffing nennt man den Beginn, bzw. das Auftreten von Mikroschweissen durch Adhäsionskräfte. Im Fall der Kolbenringe wäre dies das Verschweissen von Teilen der Zylinderwand mit der Lauffläche des Kolbenrings.

Die Hochfahrschicht kann eine Dicke von 20 µm bis 250 µm, mit Vorteil 30 um bis 100 µm, z.B. 0.05 mm (50 µm) aufweisen. Die Hochfahrschicht bietet eine erhöhte Sicherheit während den ersten Betriebsstunden und insbesondere während den Abnahmeversuchen und Einstellversuchen von stationären Motoren und Schiffsmotoren. Bei diesen Versuchen werden die Motoren in Extrembereichen unter extremen Betriebs-Bedingungen gefahren. Die Betriebsbedingungen, d.h. die Betriebsparameter werden rasch und abrupt verändert, wobei sich Betriebszustände einstellen, welche u.a. Kolben, Kolbenringe und Zylinder extrem und ungünstig belasten. Dass derartige Betriebzustände und Betriebzustandsänderungen besonders in der Einfahrzeit für diese Teile schädlich sein können ist bekannt. Die Hochfahrschicht bringt hier zusätzlichen Schutz vor Beschädigungen der Kolbenringe und Zylinder.

Die Hochfahrschicht oder Einfahrschicht kann aus einer Matrix aus niedrig legiertem Stahl mit der folgend angegebenen Zusammensetzung (in Gewichtsprozenten) bestehen. 2% bis 12%, vorzugsweise 4% bis 10% Festschmierstoff (Volumenprozente), z.B. MoS₂ ist in die Matrix eingebettet.

Niedrig legierter Stahl (Prozentzahlen in Gewichtsprozent):

| | | | |
|---|---|---|---|
| C | 1% bis 2%, | vorzugsweise | 1.5% |
| Cr | 2% bis 5% | vorzugsweise | 4 % |
| Mn | 1% bis 3% | vorzugsweise | 1.5% |
| Cu | 0.2% bis 2% | vorzugsweise | 1.5% |
| Si | 0.1% bis 1% | vorzugsweise | 0.5% |
| Fe | REST | | |

Derartige Schichten können mit dem Hochgeschwindigkeits-Flammspritzverfahren (HVOF) aufgetragen werden.

Als metallische Matrix für die Hochfahrschicht oder Einfahrschicht sind auch Kupfer-Aluminium-Legierungen mit folgender Zusammensetzung in Gewichtsprozent geeignet

| | | | |
|---|---|---|---|
| Al | 6% bis 14% | vorzugsweise | 7% bis 9% |
| Mn | 0.5% bis 4% | vorzugsweise | 2% bis 3% |
| Cu | REST | | |

Auch Kobalt-Chrom-Legierungen mit folgender Zusammensetzung in Gewichtsprozent sind als metallische Matrix für die Hochfahrschicht geeignet:

| | | | |
|---|---|---|---|
| Cr | 20 % bis 40 % | vorzugsweise | 30% |
| C | 1 % bis 3.5% | vorzugsweise | 2% |
| B | 0.2% bis 1.5 % | vorzugsweise | 0.8% |
| Co | REST. | | |

In der Langzeitgleitfläche, der eigentlichen, auf der Zylinderwand laufenden Schicht des Kolbenrings, kann eine mit Vorteil spiralförmige und V-förmige Nute vorhanden sein, die mit einem Werkstoff gefüllt ist, dessen magnetische Eigenschaften sich von jenen des Werkstoffs unterscheidet. Die Nute kann etwa 2 mm bis 6 mm, vorzugsweise 4 mm bis 5 mm tief sein. Dies erlaubt es, die Abnutzung und Drehlage des Kolbenrings mit einem magnetischen Sensorsystem zu überwachen.

Eine V-förmige Nute und damit natürlich auch die sich darin befindliche Materialschicht wird mit der zunehmenden Abnutzung des Kolbenrings in Bewegungsrichtung des Kolbens, bzw. Kolbenrings schmaler. Einfach ausgedrückt, ist die Länge/Dauer des Signals dieser Materialschicht ein Mass für die Abnutzung des Kolbenrings. Das zeitliche Auftreten des Signals wiederum, ist bei einer spiralförmigen Nute in der Lauffläche des Kolbenrings ein Mass für die Drehlage des Kolbenrings. Wichtig ist, dass sich die Drehlage des Kolbenrings ständig ändert, d.h. dass sich der Kolbenring im Betrieb in seiner Nute im Kolben drehen kann. Weitere Einzelheiten über das Überwachen von Kolbenringen sowie der Ausbildung von Nuten in Kolbenringen finden sich beispielsweise in DE-25.17.751.

Das Erfassen der Drehlage ist mit diesen Systemen auch für Kolbenringe, welche noch in der Einlauf- oder Hochfahrphase sind, d.h. bei denen die Schicht oder die Schichten auf der Kolbenringlauffläche, noch vorhanden sind, d.h. die auch die gefüllte Nute überdecken, gut möglich. Und gerade in dieser Einfahrphase ist es besonders wichtig, dass die Kolbenringe einwandfrei funktionieren und nicht in ihrer Nute im Kolben festsitzen.

Gut geeignet als Füllmaterial in den Nuten von Kolbenringen die gewöhnlich aus einem Guss, wie z.B. einem legierten Grauguss gefertigt, sind Kupfer-Aluminium-Legierungen, die z.B. mit Kobalt, Mangan und Eisen legiert sind. Beispielsweise eignet sich als Füllmaterial eine Cu-Al-Legierung mit folgenden prozentualen Gewichtsanteilen:

| | | | |
|---|---|---|---|
| Al | 8% bis 15%, | vorzugsweise | 12 % |
| Co | 0.5% bis 3% | vorzugsweise | 2 % |
| Mn | 0.5% bis 5% | vorzugsweise | 1.5% |
| Fe | 1% bis 5% | vorzugsweise | 3 % |
| Cu | REST | | |

Die erhöhte Verschleissfestigkeit ergibt sich bei dieser Legierung durch das Ausscheiden von Partikeln aus Co-Fe-reichen, intermetallischen Verbindungen, sowie die mehrheitliche β-Matrix-Struktur der Legierung. Diese Partikel erhöhen die Belastbarkeit und Verschleissfestigkeit der Schicht. Solche verschleissfeste Füllungen in den Nuten lassen sich beispielsweise mit dem Hochgeschwindigkeits-Flammspritzverfahren (HVOF) auf den Kolbenring auftragen.

In den oben angegebenen Cu-Al-Legierungen für die Füllung der Nuten in der Lauffläche der Kolbenringe, können zusätzlich 5% bis 30% (Volumenprozent), vorzugsweise 15% bis 20% Volumenanteile Festschmierstoffe auf Kunststoffbasis wie z.B. Polyamide und/oder Polyester eingebaut sein.

Die Nute und damit die Nutenfüllung kann 2 mm bis 6 mm, vorzugsweise 4 mm bis 5 mm tief/dick sein.

Es versteht sich, dass generell alle Angaben über die Zusammensetzung von Legierungen, eventuell vorhandene Verunreinigungen nicht berücksichtigen.

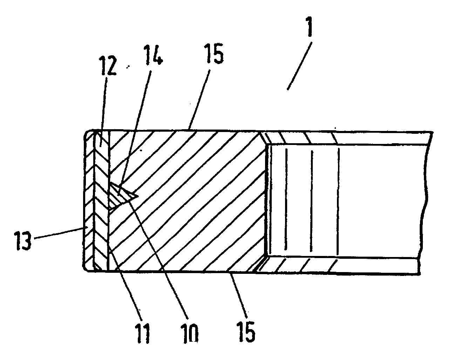

Die einzige Figur zeigt in einem schematischen Schnitt einen Kolbenring nach der Erfindung.

Auf der Lauffläche 11 des Kolbenrings 1 ist eine Hochfahroder Einfahrschicht 12, z.B. mit einem Flammspritzverfahren aufgebracht. Über der Hochfahr- oder Einfahrschicht 12 ist eine zweite Schicht, die sog. Einlaufschicht 13 aufgebracht. Die Nute 10 in der Lauffläche des Kolbenrings 1 ist ein Füllmaterial 14 eingefüllt, dessen magnetische Eigenschaften von jenen des Werkstoffs des Kolbenrings 1 wesentlich verschieden sind. Der Kolbenring 1 ist z.B. aus Grauguss, einem ferromagnetischen Material und die Füllung 14 in der Nute 10 kann ein para- oder diamagnetischer oder ein nur schwach ferromagnetischer Werkstoff sein. Die Nute 10 ist mit Vorteil spiralförmig, z.B. als eine vollständig umlaufende Windung ausgebildet so dass sie, über den Umfang des Kolbenrings 1 betrachtet verschiedenen Abstand zur Deckfläche 15 aufweist. Damit ist es leicht möglich die Winkellage, d.h. das Drehen des Kolbenrings 1 festzustellen. Es kann also festgestellt werden, wenn ein Kolbenring 1 festsitzt und nicht mehr dreht.

Die Hochfahr- oder Einfahrschicht 12 und die Einlaufschicht 13 sind ist nur einige Hundertstel-Millimeter, z.B. je 0.05 mm dick. Die Einlaufschicht 13 wird innerhalb von wenigen Betriebsstunden, den ersten 6 bis 10 Stunden abgetragen. Die Hochfahr- oder Einfahrschicht 12 wird innerhalb von wenigen Hundert Betriebsstunden, vorzugsweise 200 bis 300 Stunden abgetragen.

Es versteht sich, dass Ein Kolbenring nach der Erfindung auch nur mit einer der beiden Schichten, der Hochfahr- und Einfahrschicht 12 oder der Einlaufschicht 13 versehen sein kann. Weiter braucht ein Kolbenring 1 nach der Erfindung nicht unbedingt eine Nute 10 aufzuweisen, die mit einem vom Kolbenring magnetisch verschiedenen Werkstoff gefüllt ist. Die Nute 10 kann auch einen anderen, als einen dreieckigen Querschnitt aufweisen. Erforderlich ist nur, dass sich die Breite der Nute 10 in radialer Richtung betrachtet verändert, wenn die Abnutzung des Kolbenrings 1 in der beschriebenen Art überwacht werden soll.

Der Kolbenring 1 für Verbrennungsmotoren, insbesondere für Grossdieselmotoren weist auf der zur Zylinderwand gerichteten Lauffläche 11 eine Gleitschicht 12, 13 auf, die Festschmierstoff enthält, bzw. in dessen metallische Matrix Festschmierstoff eingelagert ist. Die eine oder die mehreren Gleitschichten 12, 13 nutzen sich in den ersten wenigen Stunden, der sog. Einlaufphase des Motors oder in den ersten wenigen hundert Betriebsstunden, der sog. Hochfahr- oder Einfahrphase des Motors ab. Diese Schichten 12, 13 verlangen in der Regel keinerlei Nachbearbeitung. Die Schichten 12, 13 bringen während den ersten Betriebsstunden, unter oft extremen Betriebsbedingungen zusätzliche Sicherheit gegen Schäden an Kolbenringen 1 und Zylindern.

## Patentansprüche

1. Kolbenring (1) für Verbrennungsmotoren, insbesondere für Grossdieselmotoren, mit einer Langzeitlauffläche (11), die zur Zylinderwand gerichtet ist, und auf welcher mindestens eine Schicht auf der Langzeitlauffläche (11) **dadurch gekennzeichnet**,
a.) dass auf der Langzeitlauffläche eine aus einer selbstschmierenden Gleitschicht bestehende Hochfahrschicht (12) aufgebracht ist, deren chemische Zusammensetzung und Dicke so gewählt sind, dass die Hochfahrschicht innerhalb weniger hundert Betriebsstunden abgenutzt wird oder
b.) dass auf der Langzeitlauffläche (11) eine aus einer selbstschmierenden Gleitschicht bestehende Einlaufschicht (13) aufgebracht ist, deren chemische Zusammensetzung und Dicke so gewählt sind, dass die Einlaufschicht innerhalb weniger Betriebsstunden abgenutzt wird oder
c.) dass auf der Langzeitlauffläche (11) eine aus einer ersten selbstschmierenden Gleitschicht bestehende Hochfahrschicht (12) aufgebracht ist, deren chemische Zusammensetzung und Dicke so gewählt sind, dass sich diese erste Schicht innerhalb weniger hundert Betriebsstunden abgenutzt und auf dieser selbstschmierenden Hochfahrschicht (12) eine aus einer zweiten selbstschmierenden Gleitschicht bestehende Einlaufschicht (13), aufgebracht ist, die eine geringere Härte als die Hochfahrschicht aufweist, wobei chemische Zusammensetzung und Dicke der Einlaufschicht so ausgewählt sind, dass sich diese Einlaufschicht innerhalb weniger Betriebsstunden abnutzt.

2. Kolbenring (1) nach Anspruch 1 bei welchem die Gleitschicht (12) oder mindestens eine der Gleitschichten (13) Festschmierstoff enthält, bzw. Festschmierstoffe in die Gleitschicht (12; 13) oder in die Gleitschichten (12, 13) eingelagert sind.

3. Kolbenring (1) nach Anspruch 1 oder 2, mit einer Einlaufschicht (13), die sich innerhalb einer Betriebszeit von weniger als 10 Stunden, vorzugsweise innerhalb einer Betriebszeit von 6 bis 9 Stunden abnutzt.

4. Kolbenring (1) nach einem der Ansprüche 1 bis 3, mit einer Hochfahrschicht (12), die sich innerhalb einer Betriebszeit von weniger als 400 Stunden, vorzugsweise innerhalb einer Betriebszeit von 200 bis 300 Stunden abnutzt.

5. Kolbenring (1) nach einem der Ansprüche 1 bis 4, bei welchem die einzige oder wenigstens eine der Gleitschichten (12; 13) eine Dicke im Bereich von 10 µm bis 200 µm, vorzugsweise 30 µm bis 100 µm aufweist.

6. Kolbenring (1) nach einem der Ansprüche 1 bis 5, mit einer Einlaufschicht (13), bei der die metallische Matrix zusammensetzt ist aus
| | |
|---|---|
| C | 0.5% bis 2%, vorzugsweise 1% des Gewichts, |
| Cr | 0.5% bis 3%. vorzugsweise 1% des Gewichts, |
| Mn | 0.5% bis 2%. vorzugsweise 1% des Gewichts, |
| Cu | 0.2% bis 2%. vorzugsweise 1.5% des Gewichts, |
| Si | 0.1 % bis 2%. vorzugsweise 0.3% des Gewichts, |
| Fe | REST, |
in welche als Festschmierstoff 2% bis 25%, vorzugsweise 10% des Volumens hexagonales Bornitrid (BN), Polyester, Polyamid, CaF2, BaF2 oder ein Eutektikum dieser Fluoride eingelagert sind.

7. Kolbenring (1) nach einem der Ansprüche 1 bis 6, mit einer Einlaufschicht oder mit einer Hochfahrschicht (12), bei der sich die metallische Matrix zusammensetzt aus
1% bis 2%, vorzugsweise 1.5% des Gewichts C,
2% bis 5%, vorzugsweise 4% des Gewichts Cr,
1% bis 3%, vorzugsweise 1.5% des Gewichts Mn,
0.2% bis 2%, vorzugsweise 1.5% des Gewichts Cu,
0.1% bis 1%, vorzugsweise 0.3% des Gewichts Si,
Rest Fe;
oder
die metallische Matrix eine Cu-Al-Legierung ist, die sich zusammensetzt aus
| | |
|---|---|
| Al | 6% bis 14% vorzugsweise 7% bis 9% |
| Mn | 0.5% bis 4% vorzugsweise 2% bis 3%, |
je in Gewichtsprozent,
| | |
|---|---|
| Cu | REST; |
oder
die metallische Matrix eine Co-Cr-Legierung ist, die sich zusammensetzt aus
| | | |
|---|---|---|
| Cr | 20 % bis 40% | vorzugsweise 30% des Gewichts |
| C | 1 % bis 3.5% | vorzugsweise 2% des Gewichts |
| B | 0.2% bis 1.5% | vorzugsweise 0.8% des Gewichts |
| Co | REST | |
in welcher 2% bis 12%, vorzugsweise 4% bis 10% Volumenprozent Festschmierstoff, insbesondere Molybdän-disulfid (MoS2) eingelagert ist.

8. Kolbenring (1) nach einem der Ansprüche 1 bis 7, mit einer oder mehreren Nuten (10) in der Langzeitlauffläche (11), wobei die Nute (10), bzw. die Nuten (10) ein Material (14) enthalten, dessen magnetische Eigenschaften sich von jenen des Materials des Kolbenrings (1) unterscheiden.

9. Kolbenring (1) nach Anspruch 8, bei welchem die Nute (10), bzw. die Nuten (10) in der Lauffläche (11) spiralartig verlaufen und über den Umfang betrachtet, einen verschiedenen Abstand zu einer der Deckflächen (15) des Kolbenrings (1) aufweisen.

10. Kolbenring (1) nach einem der Ansprüche 8 oder 9 bei welchem das Füll-Material (14) in der Nute (10) bzw. in den Nuten (10) eine mit Co, Mn und Fe legierte Cu-AI-Legierung ist, die sich zusammensetzt aus
| | |
|---|---|
| Al | 8% bis 15%, vorzugsweise 12% des Gewichts, |
| Co | 0.5% bis 3%,vorzugsweise 2% des Gewichts, |
| Mn | 0.5% bis 5%,vorzugsweise 1.5% des Gewichts, |
| Fe | 1% bis 5%, vorzugsweise 3% des Gewichts |
| Cu | REST. |

11. Kolbenring (1) nach Anspruch 10, bei welchem in die Cu-AI-Legierung in der oder den Nuten (10)
5% bis 30%, des Volumens, vorzugsweise 15% bis 20% des Volumens Festschmierstoffe, insbesondere Polyamide und/oder Polyester eingelagert sind.

12. Verbrennungsmotor, insbesondere Grossdieselmotor mit Kolbenringen (1) nach einem der Ansprüche 1 bis 11.

## Claims

1. Piston ring (1) for combustion engines, in particular for large diesel engines, having a long-term running surface (11) directed towards the cylinder wall, there being at least one layer on the long-term running surface (11), **characterized in that**
a) a running-in layer (12) consisting of a self-lubricating sliding layer is provided on the long-term running surface (11), with the chemical composition and thickness of the running-in layer (12) being selected so that it is worn away within a few hundred operating hours, or
b) a bedding-in layer (13) consisting of a self-lubricating layer is provided on the long-term running surface (11), with the chemical composition and thickness of the bedding-in layer (13) being selected so that it is worn away in a few operating hours, or
c) a running-in layer (12) consisting of a first self-lubricating layer is provided on the long-term running surface (11) with the chemical composition and thickness of the running-in layer being selected so that it is worn away within a few hundred operating hours and a bedding-in layer (13) consisting of a second self-lubricating layer is provided on this self-lubricating running-in layer and has a lower hardness than the running-in layer with the chemical composition and thickness of the bedding-in layer being selected so that it is worn away in a few operating hours.

2. Piston ring (1) in accordance with claim 1 in which the sliding layer (12) or at least one of the sliding layers (13) contains solid lubricant, i.e. solid lubricants are embedded in the sliding layer (12; 13) or in the sliding layers (12, 13).

3. Piston ring (1) in accordance with claim 1 or claim 2, with a bedding-in layer (13) which is worn away within an operating time of less than 10 hours, preferably within an operating time of 6 to 9 hours.

4. Piston ring (1) in accordance with one of the claims 1 to 3, with a running-in layer (12) which is worn away within an operating time of less than 400 hours, preferably within an operating time of 200 to 300 hours.

5. Piston ring (1) in accordance with one of the claims 1 to 4, in which the single sliding layer or at least one of the sliding layers (12; 13) has a thickness in the range from 10 µm to 200 µm, preferably 30 µm to 100 µm.

6. Piston ring (1) in accordance with one of the claims 1 to 5 with a bedding-in layer (13)
in which the metallic matrix is composed of
| | |
|---|---|
| C | 0.5 % to 2 %, preferably 1 % of the weight, |
| Cr | 0.5 % to 3 %, preferably 1 % of the weight, |
| Mn | 0.5 % to 2 %, preferably 1 % of the weight, |
| Cu | 0.2 % to 2 %, preferably 1.5 % of the weight, |
| Si | 0.1 % to 2 %, preferably 0.3 % of the weight, |
| Fe | remainder |
into which 2 % to 25 % and preferably 10 % by volume hexagonal boron nitride (BN), polyester, polyamide, CaF₂, BaF₂ or a eutecticum of these fluorides are embedded as the solid lubricant.

7. Piston ring (1) in accordance with one of the claims 1 to 6 with a bedding-in layer or with a running-in layer (12) in which the metallic matrix comprises
1 % to 2 %, preferably 1.5 % of the weight C,
2 % to 5 %, preferably 4 % of the weight Cr,
1 % to 3 %, preferably 1.5 % of the weight Mn,
0.2 % to 2 %, preferably 1.5 % of the weight Cu,
0.1 % to 1 %, preferably 0.3 % of the weight Si,
remainder Fe;
or
the metallic matrix is a Cu-Al-alloy which is composed of
| | |
|---|---|
| Al | 6 % to 14 %, preferably 7 % to 9 %, |
| Mn | 0.5 % to 4 %, preferably 2 % to 3%, |
each in percentage by weight,
with remainder Cu;
or
the metallic matrix is a Co-Cr-alloy which is composed of
| | |
|---|---|
| Cr | 20 % to 40 %, preferably 30 % of the weight, |
| C | 1 % to 3.5 %, preferably 2 % of the weight, |
| B | 0.2 % to 1.5 %, preferably 0.8 % of the weight remainder Co |
in which 2 % to 12 %, preferably 4 % to 10 % by volume of solid lubricant, in particular molybdenum disulphide (MOS₂) is embedded.

8. Piston ring (1) in accordance with one of the claims 1 to 7 having one or more grooves (10) in the long-term running surface (11), with the groove (10) or grooves (10) containing a material (14) the magnetic characteristics of which differ from those of the material of the piston ring (1).

9. Piston ring (1) in accordance with claim 8, in which the groove (10) or the grooves (10) extend in spiral-like manner in the running surface (11) and, considered over the circumference, have a varying spacing from one of the cover surfaces (15) of the piston ring (1).

10. Piston ring (1) in accordance with one of the claims 8 or 9, wherein the filling material (14) in the groove (10) or in the grooves (10) is a Cu-Al-alloy alloyed with Co, Mn and Fe which comprises
Al 8 % to 15 %, preferably 12 % of the weight,
Co 0.5 % to 3 %, preferably 2 % of the weight,
Mn 0.5 % to 5 %, preferably 1.5 % of the weight,
Fe 1 % to 5 %, preferably 3 % of the weight,
remainder Cu.

11. Piston ring (1) in accordance with claim 10 in which,
5 % to 30 % of the volume, preferably 15 % to 20 % of the volume of solid lubricants, in particular polyamide and/or polyester, are embedded into the CuAl-alloy in the groove or grooves (10).

12. Combustion engine, in particular large diesel engine having piston rings (1) in accordance with one of the claims 1 to 11.

## Revendications

1. Segment de piston (1) pour des moteurs à combustion, notamment pour de grands moteurs diesel, avec une surface de roulement de longue durée (11) orientée vers la paroi de vérin, et sur laquelle est appliquée au moins une couche sur la surface de roulement de longue durée (11), **caractérisé en ce que** :
a) **en ce qu'**il est appliqué sur la surface de roulement de longue durée une couche de démarrage (12) constituée d'une couche de glissement auto-lubrifiante dont la composition chimique et l'épaisseur sont sélectionnées de façon que la couche de démarrage soit usée à l'intérieur de quelques centaines d'heures de fonctionnement ou
b) **en ce qu'**il est appliqué sur la surface de roulement de longue durée (11) une couche permettant de se faire (13) constituée d'une couche de glissement auto-lubrifiante dont la composition chimique et l'épaisse sont sélectionnées de façon que la couche permettant de se faire soit usée à l'intérieur de quelques heures de fonctionnement ou bien
c) **en ce qu'**il est appliqué sur la surface de roulement de longue durée (11) une couche de démarrage (12) constituée d'une première couche de glissement auto-lubrifiante dont la composition chimique et l'épaisseur sont sélectionnées de façon que cette première couche s'use à l'intérieur de quelques centaines d'heures de fonctionnement et qu'il est appliqué sur cette couche de démarrage auto-lubrifiant (12) une couche permettant de se faire (13) constituée d'une deuxième couche de glissement auto-lubrifiante qui a une dureté plus basse que la couche de démarrage, où la composition chimique et l'épaisseur de la couche permettant de se faire sont sélectionnées de façon que cette couche permettant de se faire s'use à l'intérieur de quelques heures de fonctionnement.

2. Segment de piston (1) selon la revendication 1, où la couche de glissement (12) ou au moins l'une des couches de glissement (13) contient des lubrifiants solides, respectivement où des lubrifiants solides sont incorporés dans la couche de glissement (12 ; 13) ou dans les couches de glissement (12, 13).

3. Segment de piston (1) selon la revendication 1 ou 2, avec une couche permettant de se faire (13) qui s'use à l'intérieur d'une durée de fonctionnement inférieure à 10 heures, de préférence à l'intérieur d'une durée de fonctionnement de 6 à 9 heures.

4. Segment de piston (1) selon l'une des revendications 1 à 3, avec une couche de démarrage (12) qui s'use à l'intérieur d'un temps de fonctionnement inférieur à 400 heures, de préférence à l'intérieur d'un temps de fonctionnement de 200 à 300 heures.

5. Segment de piston (1) selon l'une des revendications 1 à 4, ou l'unique ou au moins l'une des couches de glissement (12, 13) présente une épaisseur dans la plage de 10 µm à 200 µm, de préférence de 30 µm à 100 µm.

6. Segment de piston (1) selon l'une des revendications 1 à 5, avec une couche destinée à se faire (13) où la matrice métallique est constituée de :
| | |
|---|---|
| C | 0,5% à 2%, de préférence 1% du poids |
| Cr | 0,5% à 3%, de préférence 1% du poids |
| Mn | 0,5% à 2%, de préférence 1% du poids |
| Cu | 0,2% à 2%, de préférence 1,5% du poids |
| Si | 0,1% à 2%, de préférence 0,3% du poids |
| Fe | Reste, |
dans laquelle sont incorporés comme lubrifiant solide 2% à 25%, de préférence 10% en volume de nitrure de bore hexagonal (BN), du polyester, du polyamide, du CaF2, BaF2 ou un eutectique de ces fluorures.

7. Segment de piston (1) selon l'une des revendications 1 à 6, avec une couche permettant de se faire ou avec une couche de démarrage (12), où la matrice métallique est constituée de
1% à 2%, de préférence 1,5% du poids C,
2% à 5%, de préférence, 4% du poids Cr,
1% à 3%, de préférence 1,5% du poids Mn,
0,2% à 2%, de préférence 1,5% du poids Cu,
0,1% à 1%, de préférence 0,3% du poids Si,
le reste Fe ;
ou bien
la matrice métallique est un alliage Cu-Al qui est constitué de
| | |
|---|---|
| Al | 6% à 14%, de préférence 7% à 9% |
| Mn | 0,5% à 4%, de préférence 2% à 3%, |
respectivement en pour-cent de poids,
| | |
|---|---|
| Cu | Reste |
ou bien
la matrice métallique est un alliage Co-Cr constitué de
| | |
|---|---|
| Cr | 20% à 40%, de préférence 30% du poids |
| C | 1% à 3,5%, de préférence 2% du poids |
| B | 0,2% à 1,5%, de préférence 0,8% du poids |
| Co | Reste |
dans laquelle est incorporée 2% à 12%, de préférence 4% à 10% en pour-cent de volume d'un lubrifiant solide, notamment d'un disulfure de molybdène (MoS2).

8. Segment de piston (1) selon l'une des revendications 1 à 7, avec une ou plusieurs rainures (10) dans la surface de roulement de longue durée (11) où la rainure (10) respectivement les rainures (10) contiennent un matériau (14) dont les caractéristiques magnétiques se différencient de celles du matériau du segment de piston (1).

9. Segment de piston (1) selon la revendication 8, où la rainure (10) respectivement les rainures (10) s'étendent dans la surface de roulement (11) en forme de spirale et, vues sur le pourtour, ont un écart différent à l'une des faces de recouvrement (15) du segment de piston (1).

10. Segment de piston (1) selon l'une des revendications 8 ou 9, où le matériau de charge (14) dans la rainure (10) respectivement dans les rainures (10) est un alliage Cu-Al allié avec du Co, Mn et Fe, qui est constitué de
| | |
|---|---|
| Al | 8% à 15%, de préférence 12% du poids, |
| Co | 0,5 à 3%, de préférence 2% du poids, |
| Mn | 0,5% à 5%, de préférence 1,5% du poids, |
| Fe | 1% à 5%, de préférence 3% du poids, |
| Cu | Reste |

11. Segment de piston (1) selon la revendication 10, où sont incorporés dans l'alliage en Cu-Al dans la où les rainures (10)
5% à 30% du volume, de préférence 15% à 20% du volume des lubrifiants solides, notamment des polyamides et/ou du polyester.

12. Moteur à combustion, notamment grand moteur diesel avec des segments de piston (1) selon l'une des revendications 1 à 11.
